Europäisches Patentamt

European Patent Office

Office européen des brevets

(19)

(11) Veröffentlichungsnummer: **0 243 697**

**A2**

(12) # EUROPÄISCHE PATENTANMELDUNG

(21) Anmeldenummer: 87104698.3

(22) Anmeldetag: 31.03.87

(51) Int. Cl.⁴: **B41F 33/00**

(30) Priorität: 30.04.86 DE 3614743

(43) Veröffentlichungstag der Anmeldung:
04.11.87 Patentblatt 87/45

(84) Benannte Vertragsstaaten:
CH FR GB IT LI SE

(71) Anmelder: Heidelberger Druckmaschinen
Aktiengesellschaft
Kurfürsten-Anlage 52-60 Postfach 10 29 40
D-6900 Heidelberg 1(DE)

(72) Erfinder: Hauck, Dieter
Klausenweg 4
D-6930 Eberbach(DE)
Erfinder: Reithofer, Jürgen
Römer-Strasse 81
D-6907 Nussloch(DE)

(74) Vertreter: Stoltenberg, Baldo Heinz-Herbert
c/o Heidelberger Druckmaschinen AG
Kurfürsten-Anlage 52-60
D-6900 Heidelberg 1(DE)

(54) Verfahren zur Verstellung von Stellgliedern an Druckmaschinen.

(57) Verfahren zur Verstellung von Stellgliedern an Druckmaschinen, wobei Daten eines Druckauftrages von einem externen Speichermedium, auf dem eine Vielzahl von selektiv abrufbaren Aufträgen gespeichert werden kann, über ein in einem Steuerpult integriertes Rechnersystem eingelesen, ausgewertet und zurückgeschrieben werden können, indem die zur Verstellung der Stellglieder benötigten Daten eines Druckauftrages, mittels eines Auftragserkennungscodes, der mit höchstens 2 Bedienelementen am Steuerpult eingebbar ist, auf dem Speichermedium aufgefunden werden, daß durch mindestens einen Befehl die dem Auftragserkennungscode zugeordneten Auftragsdaten in das Rechnersystem eingelesen und zur Einstellung der Stellglieder verwendet werden. Aufwendige Eingabegeräte werden entbehrlich.

## "Verfahren zur Verstellung von Stellgliedern an Druckmaschinen"

Der Anmeldungsgegenstand betrifft ein Verfahren zur Verstellung von Stellgliedern an Druckmaschinen, wobei Daten eines Druckauftrages von einem externen Speichermedium, auf dem eine Vielzahl von selektiv abrufbaren Aufträgen gespeichert werden kann, über ein in einem Steuerpult integriertes Rechnersystem eingelesen, ausgewertet und zurückgeschrieben werden können.

Bei sich stets wiederholenden Druckaufträgen besteht das Bedürfnis, die bereits bei vorangehenden Druckaufträgen erworbenen Maschineneinstellwerte für den Wiederholauftrag erneut zu verwenden. Durch diese Wiederverwendung der Einstelldaten reduziert sich die Maschineneneinstellzeit und der Makulaturanfall erheblich.

Als Speichermedium für Maschineneinstellwerte ist neben der Verwendung von Lochkarten und Disketten die Verwendung von Kassetten bekannt. Unter anderem wird dieses Speichermedium von der Firma MAN-Roland Druckmaschinen AG, 6050 Offenbach, bei der unter dem Namen "RCI" bekannten Farbregelanlage verwendet; ebenso bei der Firma Miller-Johannisberg Druckmaschinen GmbH, 6200 Wiesbaden, bei dem bekannten Farbfernsteuerungssystem "Unimatik C3".

Der Nachteil der obengenannten Systeme ist darin zu sehen, daß pro Druckauftrag eine Magnetbandkassette beschrieben wird, was sehr kostenintensiv ist und bei großen Druckereien infolge der Vielzahl von Kassetten zu einer Unübersichtlichkeit führt, deren Vermeidung einen erhöhten Verwaltungsaufwand für die Kassetten erfordert.

Demgegenüber bietet die unter dem Namen "HEIDELBERGER CPC I" bekanntgewordene elektronische Kontroll-und Steuertechnik der Heidelberger Druckmaschinen AG, 6900 Heidelberg, bereits den Vorteil, daß die Auftragsdaten der verwendeten Magnetbandkassetten für die Voreinstellung des Wiederholauftrages auch auf andere Druckmaschinen übertragbar sind.

Aus der DE-OS 34 10 683 ist ferner die Verwendung der Magnetbandkassette als Sammelauftragspeicher bekannt. Bei diesem System erfolgt der Zugriff auf die auf dem Magnetband abgespeicherten Auftragsdaten über ein Benutzerterminal, welches mit der entsprechend umfangreichen Hard-und Software zusammenarbeitet, die wiederum kostenintensiv ist und sich für den Einsatz in kleineren Druckereien daher weniger eignet.

Der Erfindung liegt daher die Aufgabe zugrunde, ein Verfahren zu schaffen, welches durch einfache Bedienung am Steuerpult der Druckmaschine das Auffinden bzw. Einlesen der Auftragsdaten vom Magnetband, eine Verstellung der Stellglieder mittels dieser Daten und ein zurückschreiben der Daten auf das Speichermedium gewährleistet und zudem kostengünstig ist.

Die Aufgabe wird erfindungsgemäß dadurch gelöst, daß zur Verstellung der Stellglieder ein Auftragserkennungscode am Steuerpult der Druckmaschine eingegeben wird, mit dessen Hilfe ein Zugriff auf die sich auf dem Speichermedium befindlichen Auftragsdaten ermöglicht wird.

Die Möglichkeit mittels eines Codes, der über ein einfaches Bedienelement eingegeben wird, auf den gewünschten Datensatz zugreifen zu können, erlaubt den Verzicht auf ein Bedienungsterminal mit entsprechend umfangreicher Hard-und Software, was sich vorteilhafterweise nicht unerheblich kostendämpfend auswirkt. Zudem wird durch das Betätigen einer minimalen Anzahl von Bedienungselementen die Maschinenbedienung wesentlich vereinfacht.

In einer Weiterbildung des Erfindungsgegenstandes ist für die Codeeinstellung am Steuerpult der Druckmschine wenigstens ein Taster vorgesehen, durch dessen Betätigung der entsprechende Code eingestellt werden kann. Ist beispielsweise der Auftrag Nr. 10 zu bearbeiten, so ist, von der Ausgangsposition Nr. 1 ausgehend, der Taster neunmal zu betätigen.

Sofern der Code zwei oder mehrere Stellen hat, ist in einer weiteren Ausgestaltung des Erfindungsgegenstandes ein Taster für jede Codestelle vorgesehen. Ist beispielsweise der Auftrag Nr. 41 zu bearbeiten, so ist lediglich der Taster für Zehnerstellen viermal zu tätigen.

In einer vorteilhaften Weiterbildung des Anmeldungsgegenstandes ist ein Display zur Anzeige des jeweils eingegebenen Codes vorgesehen, sowie ein weiteres Display, welches anzeigt, ob unter diesem eingegebenen Code auch Auftragsdaten auf dem Speichermedium abgespeichert sind.

In einer weiteren Ausgestaltung des Anmeldungsgegenstandes ist ein rasterbarer Drehschalter vorgesehen, mit dessen Hilfe der gewünschte Code durch entsprechende Positionierung des Drehschalters eingestellt werden kann. Wird beispielsweise Auftrag 23 gewünscht, so wird der Drehschalter in die Position 23 gedreht. Die Lage der einzelnen möglichen Codepositionen sind dabei auf dem Steuerpult im Bereich des Drehschalters gekennzeichnet.

Bei einer weiteren Ausgestaltung des Erfindungsgegenstandes ist ein Display vorgesehen, welches die vom Speichermedium eingelesenen Daten in Form von Maschineneinstellwerten anzeigt. Durch diese Maßnahme ist es dem Drucker möglich, vorab die Einstellwerte zu überprüfen.

Bei einer vorteilhaften Ausgestaltung des Anmeldungsgegenstandes, wird durch die Betätigung eines Tasters aufgrund dessen eine Befehlsfolge im Rechnersystem ausgelöst wird, die Möglichkeit geschaffen, die aktuellen Maschineneinstelldaten wieder auf das Speichermedium zurückzuschreiben. Durch diese Maßnahme können die ursprünglichen Maschineneinstelldaten bei Bedarf jeweils aktualisiert werden.

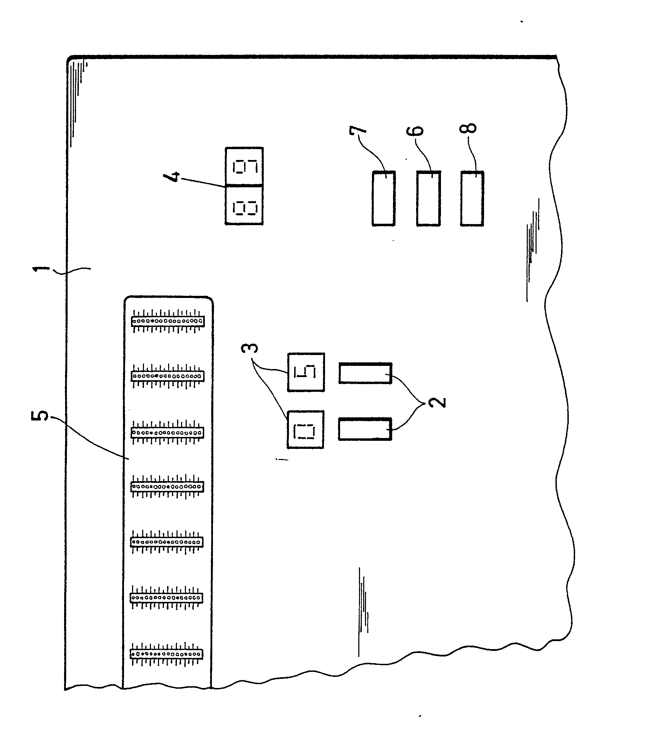

Ein Ausführungsbeispiel des Anmeldungsgegenstandes ist in der Zeichnung dargestellt und wird im folgendem näher beschrieben.

Auf dem Steuerpult I der Druckmaschine befindet sich neben einer Vielzahl von nicht dargestellten Bedienungselementen die Taster 2 zur Einstellung des Auftragserkennungscodes. Display 3 zeigt dabei den mit den Tastern 2 eingegebenen Code an, Display 4 zeigt zudem durch einen Servicecode, der aus einer Ziffernfolge z.B. 88 besteht an, ob unter dem eingegebenen Auftragserkennungscode Maschineneinstelldaten abgespeichert sind. Ein anderer Servicecode z.B. 97 hat die Bedeutung, daß keine Daten abgespeichert sind. Durch die Betätigung des Tasters 7 wird das Rechnersystem veranlaßt, die unter dem eingestellten Code abgelegten Daten von einer nicht dargestellten Kassette in das Steuersystem der Druckmaschine einzulesen. Das Display 5 zeigt die eingelesenen Maschineneinstelldaten für jedes Stellglied gesondert an. Durch Betätigen des Tasters 6 werden die Stellglieder entsprechend den eingelesenen Daten positioniert.

Der Taster 8 ermöglicht das Zurückschreiben der aktuellen Maschineneinstelldaten auf das Speichermedium.

## Ansprüche

I. Verfahren zur Verstellung von Stellgliedern an Druckmaschinen, wobei Daten eines Druckauftrages von einem externen Speichermedium, auf dem eine Vielzahl von selektiv abrufbaren Aufträgen gespeichert werden kann, über ein in einem Steuerpult integriertes Rechnersystem eingelesen, ausgewertet und zurückgeschrieben werden können,

**dadurch gekennzeichnet,**

daß die, zur Verstellung der Stellglieder benötigten -sich auf einem Speichermedium befindlichen-, Daten eines Druckauftrages, mittels eines Auftragserkennungscodes, der mit höchstens 2 Bedienelementen am Steuerpult eingebbar ist, auf dem Speichermedium aufgefunden werden,

daß durch mindestens einen Befehl die dem Auftragserkennungscode zugeordneten Auftragsdaten in das Rechnersystem eingelesen und zur Einstellung der Stellglieder verwendet werden.

2. Verfahren nach Anspruch I,

**dadurch gekennzeichnet,**

daß die Codeeingabe und die Befehle zum Dateneinlesen, bzw. zur Einstellung der Stellglieder mittels einem oder mehreren Tastern erfolgt.

3. Verfahren nach Anspruch I,

**dadurch gekennzeichnet,**

daß die Codeeingabe mittels eines Drehschalters erfolgt.

4. Verfahren nach Anspruch I,

**dadurch gekennzeichnet,**

daß der eingegebene Code mittels eines Displays angezeigt wird.

5. Verfahren nach Anspruch I,

**dadurch gekennzeichnet,**

daß mittels eines Displays 4 angezeigt wird, ob unter dem eingegebenen Code Auftragsdaten abgespeichert sind.

6. Verfahren nach Anspruch I,

**dadurch gekennzeichnet,**

daß die vom Speichermedium eingelesenen Maschineneinstelldaten mittels Diodendisplay angezeigt werden.

7. Verfahren nach Anspruch I,

**dadurch gekennzeichnet,**

daß mittels eines Tasters 8 die aktuellen Maschinen Einstellwerte auf das Speichermedium zurückschreibbar sind.